# FASCICULE DE BREVET EUROPEEN

(11) **EP 0 738 983 B1**
(45) Date de publication et mention de la délivrance du brevet: **12.12.2001**
(21) Numéro de dépôt: 96400825.4
(22) Date de dépôt: 18.04.1996
(51) Int. Cl.: G06K 7/06

(54) **Connecteur électrique pour une carte à circuit(s) intégré(s) à contact**
Elektrischer Verbinder für eine Kontaktkarte mit integrierten Schaltungen
Electric connector for an integrated circuit contact card

(30) Priorité: 21.04.1995 FR 9504784; 13.12.1995 FR 9514767
(43) Date de publication de la demande: 23.10.1996
(73) Titulaire: ITT INDUSTRIES, 39100 Dole (FR)
(72) Inventeur: Bricaud, Hervé, 39100 Dole (FR); Valcher, Fabrice, 39500 Damparis (FR); Pizard, Yves, 39100 Dole (FR)
(74) Mandataire: Kohn, Philippe

(56) Documents cités:
- EP-A- 0 476 892
- EP-A- 0 643 361
- DE-A- 4 138 342

## Description

La présente invention concerne un connecteur électrique pour carte à mémoire à circuit(s) intégré(s) à contact.

Une telle carte, aussi appelée carte à mémoire électronique, est de forme générale rectangulaire et comporte sur une de ses faces principales une pluralité de plages de contact électrique alignées et parallèles.

Une telle carte, quels que soient ses dimensions et le type d'application dans laquelle elle est utilisée, doit être raccordée électriquement à un circuit d'exploitation des données qu'elle contient.

A cet effet, la carte est associée à un connecteur électrique pour son raccordement à un dispositif de lecture/écriture comportant le circuit d'exploitation des données de la carte.

Dans toutes les applications connues à ce jour, il est souhaitable de réduire au minimum les dimensions du connecteur et plus particulièrement lorsque la carte est une carte de petite dimension, également appelée carte SIM, qui est par exemple utilisée dans le domaine des radiotéléphones.

Malgré ses petites dimensions, le connecteur doit assurer un raccordement électrique fiable de la carte tout en permettant une mise en place et une extraction relativement aisée de la carte.

A cet effet, il a été proposé, par exemple dans le document US-A-5.226.826, de réaliser le connecteur sous la forme d'un support en matériau isolant dont la face supérieure comporte des éléments de contact électrique susceptibles de coopérer avec les plages conductrices de la carte, cette dernière étant reçue dans un réceptacle agencé dans un couvercle articulé monté pivotant par rapport au support et par rapport auquel il peut pivoter entre une position ouverte permettant la mise en place de la carte dans un réceptacle du couvercle, et une position fermée dans laquelle la carte est plaquée contre les extrémités libres de contact des éléments de contact électrique du support en matériau isolant.

Une telle conception est relativement complexe car elle nécessite de prévoir des moyens d'articulation du couvercle sur le support et des moyens de verrouillage en position fermée du couvercle, et elle n'est pas applicable dans certains appareils dans lesquels l'espace nécessaire pour permettre l'ouverture du couvercle vers la position de mise en place et d'extraction de la carte n'est pas disponible.

Une autre conception d'un connecteur électrique est décrit et représenté dans le document DE-A-4.138.342 qui illustre un connecteur électrique du type comportant un support en matériau isolant qui délimite un logement ouvert dans sa face supérieure, délimité latéralement par deux bords longitudinaux parallèles et longitudinalement par un bord arrière et qui reçoit une carte comportant sur sa face principale inférieure des plages conductrices qui coopèrent avec les extrémités de contact d'éléments de contact électrique agencés dans le fond du logement du support lorsque la carte est dans sa position de raccordement dans laquelle son bord transversal arrière est en butée contre le bord transversal arrière du logement, et du type dans lequel les éléments de contact électrique sont portés par le support et comportent des extrémités libres de raccordement qui s'étendent longitudinalement au-delà des deux faces transversales opposées du support.

En position de raccordement, c'est-à-dire lorsque la carte est en place dans le logement, le bord transversal avant de la carte s'étend en regard de deux parties en surépaisseur par rapport au fond du logement qui délimitent deux tronçons d'un bord transversal avant du logement.

Le bord transversal avant de la carte est situé longitudinalement en arrière de la face transversale avant du support et l'extraction de la carte hors du logement du support n'est rendue possible que grâce à l'agencement d'un poussoir d'extraction monté coulissant dans le couvercle et sur lequel il est nécessaire de pouvoir agir en accédant à la face supérieure du couvercle pour provoquer l'extraction de la carte.

Cette conception est donc particulièrement complexe en faisant appel à de nombreux composants et elle impose d'introduire la carte dans le connecteur selon une direction d'introduction parallèle au plan général de la carte de façon que le bord transversal arrière de la carte vienne pénétrer dans l'encoche du poussoir d'extraction lors de la mise en place de la carte.

La présente invention a pour but de proposer un connecteur électrique du type de celui décrit et représenté dans le document DE-A-4.138.342. qui remédie aux inconvénients qui viennent d'être mentionnés.

Dans ce but, l'invention propose un connecteur électrique caractérisé en ce que le bord transversal avant de la carte, en position de raccordement, est situé longitudinalement en avant de la face transversale avant du support de manière que la carte présente une partie avant faisant saillie longitudinalement à l'extérieur du logement et au-delà des extrémités libres de raccordement pour faciliter sa préhension.

Selon d'autres caractéristiques de l'invention :
- le bord transversal arrière du logement est situé longitudinalement en avant par rapport à la face transversale arrière du support ;
- le support et le logement se prolongent longitudinalement vers l'avant au-delà de la face transversale arrière du support par deux prolongements latéraux, et le logement est délimité longitudinalement par deux tronçons d'un bord transversal avant formés respectivement dans lesdits prolongements et qui s'étendent en regard des portions en vis-à-vis du bord transversal avant de la carte en position de raccordement dans son logement ;
- le connecteur comporte un couvercle de maintien de la carte dans le logement qui s'étend au-dessus de la face supérieure de la carte et qui est délimité longitudinalement par deux bords transversaux arrière et avant situés longitudinalement entre les faces transversales arrière et avant du support ;
- le bord transversal arrière du couvercle est situé longitudinalement en avant par rapport au bord transversal arrière du logement ;
- le bord transversal avant du couvercle est situé sensiblement au droit de la face transversale avant du support ;
- le couvercle est réalisé sous la forme d'une plaque qui s'étend au-dessus de la face supérieure de la carte et dont les bords latéraux parallèles se prolongent par deux pattes rabattues vers le bas pour la fixation du couvercle sur le support ;
- les deux pattes de fixation constituent des glissières permettant le montage du couvercle sur le support par coulissement selon la direction longitudinale ;
- le couvercle est monté coulissant par rapport au support entre une position fermée dans laquelle il s'étend au-dessus du logement et une position ouverte dans laquelle l'accès au logement est dégagé pour permettre la mise en place de la carte selon une direction sensiblement perpendiculaire au fond du logement ;
- le couvercle est une pièce métallique ;
- le couvercle comporte une série de trous qui, en position fermée du couvercle, s'étendent en regard des extrémités de contact des éléments de contact.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un premier mode de réalisation d'un connecteur électrique conforme aux enseignements de l'invention sur lequel le couvercle de maintien de la carte est illustré en position éclatée par rapport au support ;
- la figure 2 est une vue de dessus du support en matériau isolant du connecteur illustré à la figure 1 ;
- la figure 3 est une vue selon la flèche F de la figure 2 ;
- la figure 4 est une vue de dessus du connecteur de la figure 1 avec le couvercle en position assemblée de maintien de la carte et avec cette dernière illustrée en silhouette ;
- la figure 5 est une vue en section selon la ligne 5-5 de la figure 4 ;
- la figure 6 est une vue latérale de gauche du connecteur de la figure 4 ;
- la figure 7 est une vue en perspective éclatée d'un second mode de réalisation d'un connecteur électrique conforme aux enseignements de l'invention ;
- la figure 8 est une vue de dessus du connecteur représenté à la figure 7 avec le couvercle en position fermée de maintien de la carte, cette dernière étant illustrée en silhouette ;
- la figure 9 est une vue similaire à celle de la figure 8 avec le couvercle en position ouverte escamotée facilitant l'extraction et la mise en place de la carte ; et
- la figure 10 est une vue en section partielle selon la ligne 10-10 de la figure 9,

Dans la description qui va suivre, des composants identiques ou similaires seront désignés par les mêmes chiffres de référence.

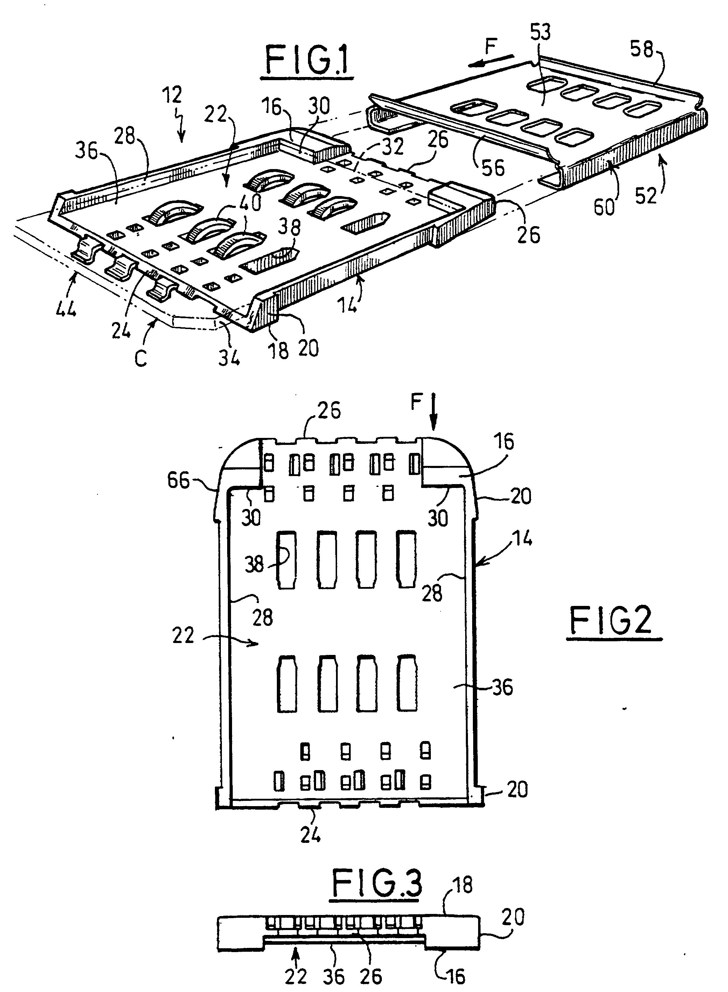

Le connecteur électrique 12 illustré aux figures 1 à 6 est essentiellement constitué par un support en matériau isolant 14 en forme générale de plaque rectangulaire délimitée par une face plane supérieure 16 et par une face inférieure 18.

Le corps en matériau isolant 14 est délimité latéralement par deux faces longitudinales et parallèles 20 et il est délimité longitudinalement par une face transversale avant 24 et par une face transversale arrière 26.

Un logement 22, destiné à recevoir au moins en partie une carte à mémoire électronique C, est formé venu de matière par moulage, dans la face supérieure 16 du support 14.

Le logement est délimité latéralement par deux bords longitudinaux parallèles et opposés 28.

Le logement 22 est délimité longitudinalement vers l'arrière par un bord transversal arrière 30, réalisé ici sous la forme de deux tronçons agencés latéralement de manière opposée et qui s'étendent transversalement depuis les bords longitudinaux 28.

Le bord transversal arrière 30 constitue une butée déterminant la position longitudinale de la carte C dans le logement 22, lorsque cette dernière est en position de lecture/écriture, le bord transversal avant 32 de la carte C coopérant avec le bord transversal arrière 30 du logement 22.

La position latérale de la carte C dans le logement 22 est déterminée par les bords longitudinaux 28 du logement 22 qui coopèrent avec les bords latéraux opposés 34 de la carte.

Le fond 36 du logement 22, qui est un fond plan parallèle à face supérieure 16, comporte une série de fenêtres 38 permettant le passage d'extrémités de contact 40 dont chacune appartient à un élément de contact électrique 42 porté par le support 14.

Chaque extrémité de contact 40 fait saillie verticalement au-dessus du fond 36 du logement 22 et elle est destinée à coopérer, lorsque la carte est en position de raccordement dans le logement 22, avec des plages électriques conductrices (non représentées) agencées sur la face inférieure 44 de la carte C.

Chaque élément de contact électrique 42 est réalisé selon une conception connue qui est par exemple décrite et représentée dans le document WO-A-95/18.421.

Ainsi, chaque élément de contact électrique 42 est constitué pour l'essentiel par une lame conductrice déformable dont la partie centrale 46 est portée par le support isolant 14, dont une extrémité constitue l'extrémité libre de contact 40 et dont l'autre extrémité libre constitue une extrémité de raccordement électrique 48 destinée à permettre le raccordement du connecteur à un circuit de traitement d'un dispositif de lecture/écriture des données contenues dans la carte.

Comme on peut le voir notamment sur les figures 1, 4 et 5, les extrémités libres de raccordement 48 s'étendent longitudinalement au-delà de la face transversale arrière 26 et longitudinalement vers l'avant au-delà de la face transversale avant 24 du support en matériau isolant 14.

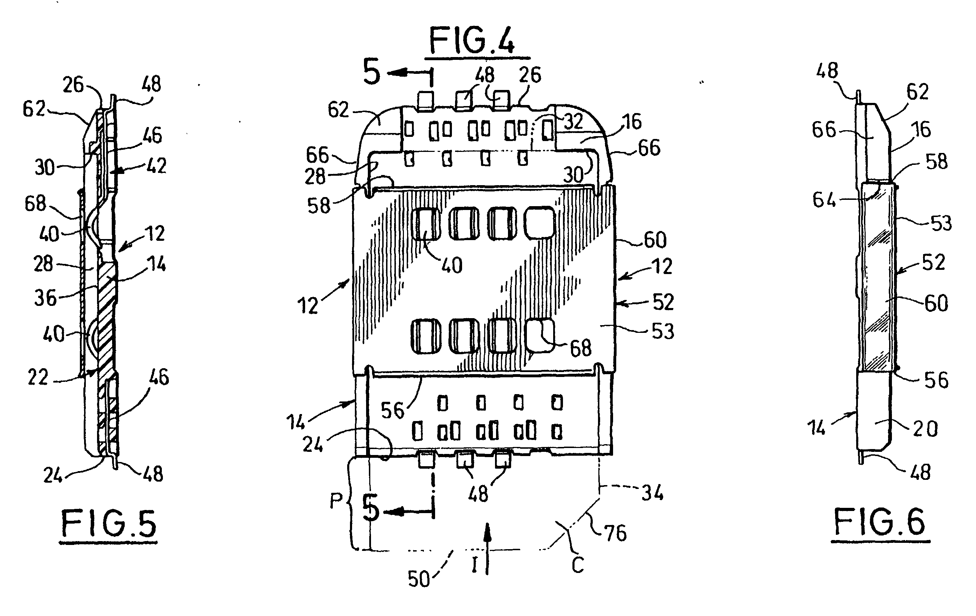

Conformément à l'invention, et comme on peut le voir aux figures 1 et 4, les dimensions du support en matériau isolant 14 et du logement 22 sont telles que, lorsque la carte C est en position de raccordement dans le logement 22, son bord transversal avant 50 s'étend longitudinalement vers l'avant bien au-delà de la face transversale avant 24 du support 14 pour constituer une partie de préhension P de la carte C qui facilite sa prise en main par un utilisateur en vue de l'extraction de la carte C hors du logement 22 et ceci quelle que soit la direction d'extraction, c'est-à-dire parallèlement au plan de la carte C ou selon un mouvement plus complexe par rapport à ce plan.

Comme on peut le voir aux figures 1 et 4, la longueur de la partie de préhension P est suffisamment importante pour faciliter sa préhension et éviter que les doigts de l'utilisateur ne viennent trop près des extrémités de raccordement électrique 48 des éléments de contact 42 du connecteur 12.

En position de raccordement, la carte C est suffisamment guidée latéralement par les bords longitudinaux 28 du logement 22 et elle est en butée contre le bord transversal arrière 30 pour délimiter correctement sa position de raccordement par rapport au support 14.

Afin d'assurer un bon maintien en position de la carte C dans le logement 22, le connecteur 12 comporte également un couvercle 52.

Le couvercle 52 est ici une pièce en tôle découpée et pliée qui est constituée pour l'essentiel par une plaque supérieure 53 qui, dans la position montée du couvercle 52 sur le support 14 illustrée aux figures 1 et 4 à 6, s'étend verticalement au-dessus de la carte C, c'est-à-dire au-dessus de la partie centrale du logement 22 et en regard des extrémités de contact 40 des élément de contact 42.

La plaque 54 du couvercle est délimitée par un bord transversal avant 56 qui est situé longitudinalement vers l'arrière par rapport à la face transversale avant 24 du support 14, et par un bord transversal arrière 58 qui est situé longitudinalement vers l'avant par rapport au bord transversal arrière 30 du logement 22 et donc par rapport à la face transversale arrière 26 du support 14.

Cette conception permet de réaliser un couvercle 52 de petites dimensions et parfaitement symétrique assurant ainsi une économie maximum de matière et une automatisation aisée de l'assemblage du couvercle sur le support.

A titre de variante, non représentée sur les figures, le couvercle 52 peut être de plus grande longueur avec son bord transversal avant 56, en position assemblée, s'étendant sensiblement au droit de la face transversale avant 24 du support 14. Cette variante permet de réaliser un connecteur blindé et d'assurer son montage sur une carte à circuit imprimé par brasage des bords latéraux du couvercle sur cette carte.

Le couvercle 52 comporte deux pattes latérales de fixation 60 qui se présentent sous la forme de pattes rabattues deux fois à angle droit pour constituer deux glissières dont les dimensions sont telles qu'elles permettent la mise en place par coulissement, selon la flèche F de la figure 1, du couvercle 52 sur le support isolant 14.

Pour faciliter la mise en place par coulissement du couvercle 52, la partie arrière de la face supérieure 16 du support isolant 14 comporte deux tronçons de chanfrein 62.

La position longitudinale du couvercle 52 par rapport au support 14, illustrée aux figures 4 à 5, est déterminée par deux encoches de faible profondeur 64 formées dans les faces latérales 20 du support 14 dont les dimensions correspondent à la longueur du couvercle, les pattes 60 étant légèrement déformées élastiquement lors de la mise en place par introduction du support 14 dans les glissières 60 par coopération avec des portions en forme de rampes 66, les pattes 60 de fixation et de guidage retrouvant par élasticité leurs dimensions d'origine pour venir s'emboîter dans les encoches 64.

Ainsi, lorsqu'il est en position assemblée, le couvercle 52 est maintenu longitudinalement par rapport au support 14.

Conformément à une caractéristique de l'invention, la face supérieure en forme de plaque 53 du couvercle 52 comporte une série de trous 68 qui sont agencés en regard des extrémités de contact 40.

La présence des trous 68 permet d'effectuer une opération de test électrique du bon raccordement du connecteur au dispositif de lecture/écriture en introduisant par les trous 68 des sondes de test, sans avoir à ôter le couvercle.

De plus, lorsqu'aucune carte n'est présente dans le connecteur, la présence des trous 68 permet d'éviter des courts-circuits entre le couvercle 52 qui est métallique et les extrémités libres de contact 40.

Comme on peut le voir aux figures 5 et 6, l'épaisseur du connecteur 12, avec son couvercle 52, est particulièrement réduite.

Afin de faciliter la mise en place de la carte C par introduction dans le logement 22 selon une direction I (voir figure 4) parallèle au plan de la carte, les bords transversaux avant 56 et arrière 58 du couvercle 52 sont légèrement chanfreinés, c'est-à-dire qu'ils sont repliés vers le haut comme on peut le voir aux figures 1 et 5.

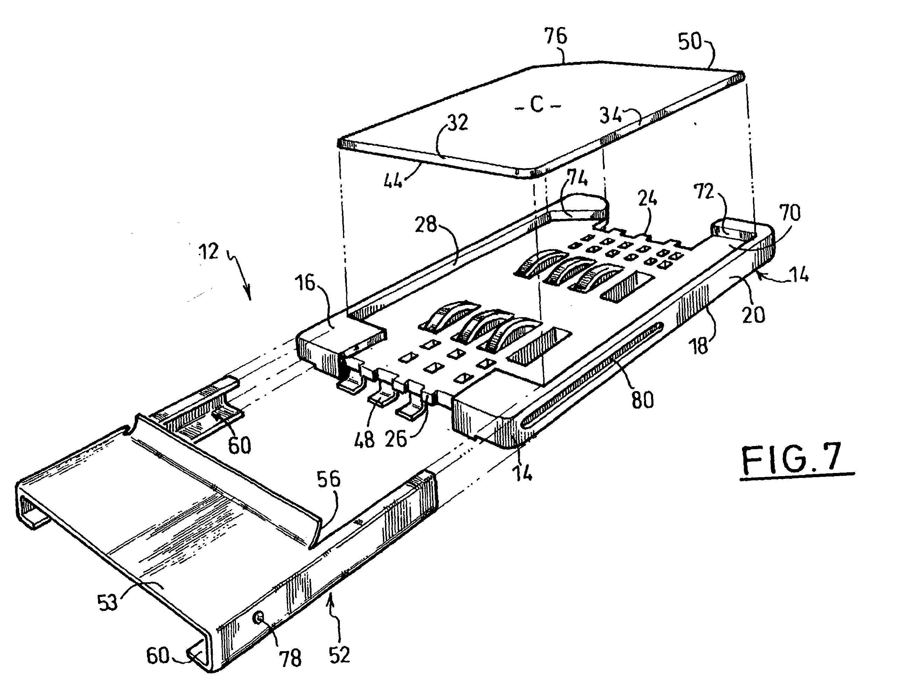

On décrira maintenant le second mode de réalisation illustré aux figures 7 à 10.

Dans ce second mode de réalisation, le support isolant 14 se prolonge longitudinalement vers l'avant au-delà de sa face transversale avant 24 par deux prolongements latéraux 70 dans lesquels se prolonge également le logement 22 qui est délimité ici longitudinalement vers l'avant par un bord transversal avant 72.

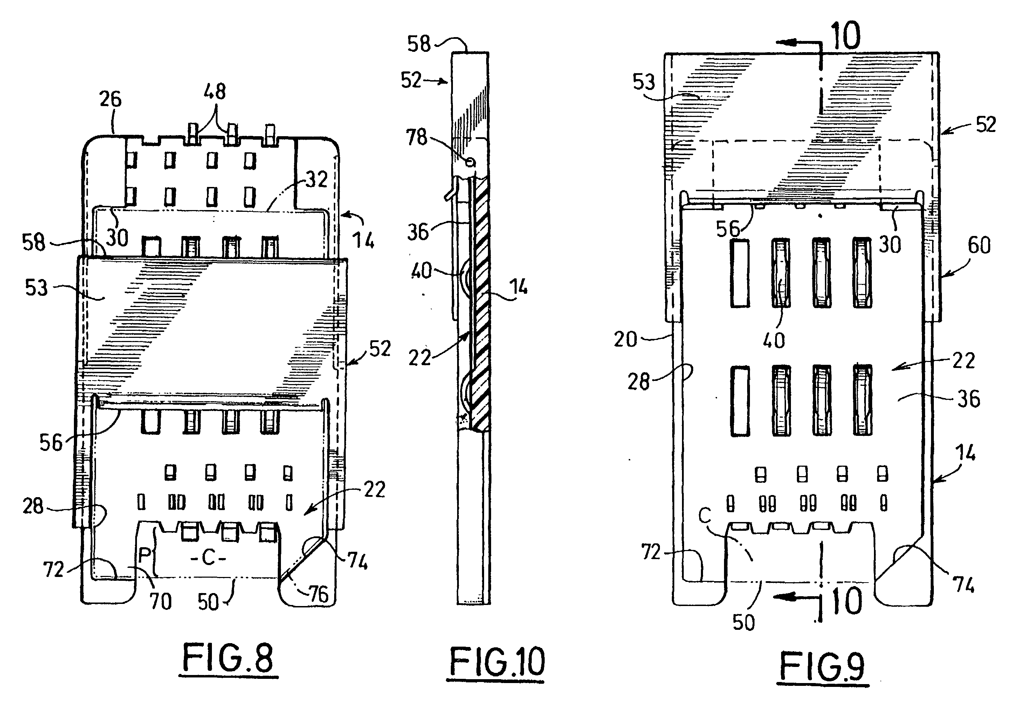

A sa partie gauche, en considérant les figures 8 et 9, le bord transversal avant 72 est parallèle au bord transversal arrière 30 tandis que sa partie de droite est réalisée sous la forme d'un bord 74 incliné sensiblement à 45° pour constituer un moyen de détrompage complémentaire de l'angle coupé 76 de la carte SIM qui est représentée sur les figures.

La carte C est ainsi maintenue longitudinalement dans le logement 22 par ses deux bords transversaux arrière 32 et avant 50, mais elle comporte toujours une portion P en saillie au-delà de la face transversale avant 24 facilitant sa préhension pour la mettre en place dans le logement 22, ou pour l'extraire de celui-ci.

Le couvercle 52 est ici monté coulissant sur le support 14 entre sa position fermée de maintien de la carte C dans le logement 22 qui est illustrée à la figure 8 et une position escamotée, ou ouverte, illustrée aux figures 9 et 10 dans laquelle le logement 22 est entièrement dégagé de manière à permettre la mise en place et l'extraction de la carte C selon une direction sensiblement perpendiculaire à son plan général.

Afin d'éviter l'échappement accidentel, par coulissement longitudinal, du couvercle 52 par rapport au support 14, les pattes rabattues formant glissières 60 comportent des ergots en relief vers l'intérieur 78 qui sont reçues en coulissement dans des rainures 80 formées dans les faces longitudinales 20 du support 14.

La carte C peut aussi être mise en place, le couvercle 52 étant alors fixe dans sa position assemblée de la figure 8, en déformant légèrement la carte de manière à l'introduire sensiblement selon une direction parallèle à son plan général, le bord transversal avant 32 de la carte pénétrant dans le logement 22 dans la zone délimitée par son bord transversal avant 72 et par le bord transversal avant 56 du couvercle 52.

L'invention peut trouver à s'appliquer dans le cas où le connecteur est monté directement sur une carte à mémoire électronique du type "PCMCIA".

L'invention n'est pas limitée à la présence d'un couvercle, amovible ou non, le connecteur sans couvercle présentant alors une épaisseur réduite.

## Revendications

1. Connecteur électrique (12) pour carte (C) à mémoire à circuit(s) intégré(s) à contact de forme générale rectangulaire, du type comportant un support (14) en matériau isolant qui délimite un logement (22) ouvert dans sa face supérieure (16), délimité latéralement par deux bords longitudinaux parallèles (28) et transversalement par au moins un bord arrière (30) et qui reçoit une carte (C) comportant sur sa face principale inférieure (44) des plages conductrices qui coopèrent avec les extrémités (40) de contact d'éléments de contact électrique (42) agencées dans le fond (36) du logement (22) du support (14) lorsque la carte (C) est dans sa position de raccordement dans laquelle son bord transversal arrière (32) est en butée contre le bord transversal arrière (30) du logement, et du type dans lequel les éléments de contact électrique (42) sont portés par le support (14) et comportent des extrémités libres de raccordement (48) qui s'étendent longitudinalement au-delà des deux faces transversales opposées (24, 26) du support (14), **caractérisé en ce que** le bord transversal avant (50) de la carte (C), en position de raccordement, est situé longitudinalement en avant de la face transversale avant (24) du support (14) et des extrémités libres de raccordement (48), de manière que la carte (C) présente une partie avant (P) faisant saillie longitudinalement à l'extérieur du logement (22) pour faciliter sa préhension.

2. Connecteur selon la revendication 1, **caractérisé en ce que** le bord transversal arrière (30) du logement est situé longitudinalement en avant par rapport à la face transversale arrière (26) du support (14).

3. Connecteur selon l'une des revendications 1 ou 2, **caractérisé en ce que** le support (14) et le logement (22) se prolongent longitudinalement vers l'avant au-delà de la face transversale avant (24) du support (14) par deux prolongements latéraux (70), et **en ce que** le logement (22) est délimité longitudinalement par deux tronçons (72, 74) d'un bord transversal avant formés respectivement dans lesdits prolongements (70) et qui s'étendent en regard des portions en vis-à-vis du bord transversal avant (50) de la carte (C) en position de raccordement dans le logement (22).

4. Connecteur selon l'une quelconque des revendications précédentes, **caractérisé en ce qu'**il comporte un couvercle (52) de maintien de la carte (C) dans le logement (22) qui s'étend au-dessus de la face supérieure de la carte et qui est délimité longitudinalement par deux bords transversaux arrière (58) et avant (56) situés longitudinalement entre les faces transversales arrière (26) et avant (24) du support (14).

5. Connecteur selon la revendication 4, **caractérisé en ce que** le bord transversal arrière (58) du couvercle (52) est situé longitudinalement en avant par rapport au bord transversal arrière (30) du logement (22).

6. Connecteur selon la revendication 4, **caractérisé en ce que** le bord transversal avant (56) du couvercle (52) est situé longitudinalement sensiblement au droit de la face transversale avant (24) du support (14).

7. Connecteur selon l'une quelconque des revendications précédentes, **caractérisé en ce que** le couvercle (52) est réalisé sous la forme d'une plaque (53) qui s'étend au-dessus de la face supérieure de la carte (C) et dont les bords latéraux parallèles se prolongent par deux pattes (60) rabattues vers le bas pour la fixation du couvercle sur le support (14).

8. Connecteur selon la revendication 7, **caractérisé en ce que** les deux pattes de fixation (60) constituent des glissières permettant le montage du couvercle (52) sur le support (14) par coulissement selon la direction longitudinale.

9. Connecteur selon la revendication 8, **caractérisé en ce que** le couvercle (52) est monté coulissant par rapport au support (14) entre une position fermée dans laquelle il s'étend au-dessus du logement (22) et une position ouverte dans laquelle l'accès au logement (22) est dégagé pour permettre la mise en place de la carte (C) selon une direction sensiblement perpendiculaire au fond du logement.

10. Connecteur selon l'une quelconque des revendications précédentes, **caractérisé en ce que** le couvercle (52) est une pièce métallique.

11. Connecteur selon l'une quelconque des revendications précédentes, **caractérisé en ce que** le couvercle (52) comporte une série de trous (68) qui, en position fermée du couvercle (52), s'étendent en regard des extrémités de contact (40) des éléments de contact (42).

## Claims

1. Electrical connector (12) for a contact-type smart card (C) of rectangular general shape, of the type including a support (14) made of insulating material which bounds a housing (22) open in its upper face (16) which housing is bounded laterally by two parallel longitudinal edges (28) and transversely by at least one rear edge (30), and which receives a card (C) having conducting regions on its lower main face (44) which interact with the contacting ends (40) of electrical contact elements (42), these contacting ends being arranged in the bottom (36) of the housing (22) of the support (14), when the card (C) is in its connection position in which its rear transverse edge (32) butts up against the rear transverse edge (30) of the housing, and of the type in which the electrical contact elements (42) are carried by the support (14) and have free connection ends (48) which extend longitudinally beyond the two opposite transverse faces (24, 26) of the support (14), **characterized in that** the front transverse edge (40) of the card (C), in the connection position, is located longitudinally in front of the front transverse face (24) of the support (14) and free connection ends (48) so that the card (C) has a front part (P) projecting longitudinally out of the housing (22) in order to make it easier to grip it.

2. Connector according to claim 1, **characterized in that** the rear transverse edge (30) of the housing is located longitudinally in front of the rear transverse face (26) of the support (14).

3. Connector according to either of claims 1 and 2, **characterized in that** the support (14) and the housing (22) are prolonged longitudinally forwards beyond the front transverse face (24) of the support (14) by two lateral prolongations (70) and **in that** the housing (22) is bounded longitudinally by two sections (72, 74) of a front transverse edge which are formed respectively in the said prolongations (70) and which extend opposite the facing portions of the front transverse edge (50) of the card (C) in the connection position in the housing (22).

4. Connector according to any one of the preceding claims, **characterized in that** it includes a cover (52) for holding the card (C) in the housing (22) which extends above the upper face of the card and which is bounded longitudinally by two rear (58) and front (56) transverse edges located longitudinally between the rear (26) and front (24) transverse faces of the support (14).

5. Connector according to claim 4, **characterized in that** the rear transverse edge (58) of the cover (52) is located longitudinally in front of the rear transverse edge (30) of the housing (22).

6. Connector according to claim 4, **characterized in that** the front transverse edge (56) of the cover (52) is located longitudinally approximately in line with the front transverse face (24) of the support (14).

7. Connector according to any one of the preceding claims, **characterized in that** the cover (52) is produced in the form of a plate (53) which extends above the upper face of the card (C) and parallel lateral edges of which are prolonged by two feet (60) bent over downwards for the attachment of the cover to the support (14).

8. Connector according to claim 7, **characterized in that** the two attachment feet (60) constitute slideways allowing the cover (52) to be mounted onto the support (14) by sliding in the longitudinal direction.

9. Connector according to claim 8, **characterized in that** the cover (52) is mounted so as to slide with respect to the support (14) between a closed position in which it extends above the housing (22) and an open position in which the access to the housing (22) is clear in order to allow the card (C) to be put in place in a direction approximately perpendicular to the bottom of the housing.

10. Connector according to any one of the preceding claims, **characterized in that** the cover (52) is a metal piece.

11. Connector according to any one of the preceding claims, **characterized in that** the cover (52) has a series of holes (68) which, in the closed position of the cover (52), extend opposite to the contacting ends (40) of the contact elements (42).

## Patentansprüche

1. Elektrischer Verbinder (12) für Speicher-Kontaktkarte (C) mit integrierter(n) Schaltung(en) mit allgemein rechteckiger Form in der Ausführung, welche einen Sockel (14) aus Isoliermaterial beinhaltet, welcher ein an der Oberseite (16) offenes Gehäuse (22) abgrenzt, welches seitlich von zwei parallelen Längsrändern (28) und in Querrichtung durch mindestens einen rückwärtigen Rand (30) begrenzt wird und eine Karte (C) aufnimmt, welche auf ihrer Hauptunterseite (44) elektrisch leitende Bereiche beinhaltet, welche mit den Kontaktenden (40) von elektrischen Kontaktstücken (42) zusammenwirken, welche am Boden (36) des Gehäuses (22) des Sockels (14) angeordnet sind, wenn die Karte (C) sich in ihrer Verbindungsstellung befindet, bei der ihr rückwärtiger Querrand (32) gegen den rückwärtigen Querrand (30) des Gehäuses anliegt und in der Ausführung, bei der die elektrischen Kontaktstücke (42) von dem Sockel (14) getragen werden und freie Verbindungsenden (48) beinhalten, die sich längs über die beiden gegenüberliegenden Querflächen (24, 26) des Sockels (14) hinaus erstrecken, **dadurch gekennzeichnet, dass**
der vordere Querrand (50) der Karte (C) in der Verbindungsstellung längs vor der vorderen Querseite (24) des Sockels (14) und der freien Verbindungsenden (48) liegt, so dass die Karte (C) ein Vorderteil (P) aufweist, welches längs außen am Gehäuse (22) übersteht, um sein Ergreifen zu erleichtern.

2. Verbinder gemäß Anspruch 1, **dadurch gekennzeichnet, dass** der rückwärtige Querrand (30) des Gehäuses bezogen auf die rückwärtige Querseite (26) längs des Sockels (14) vorn liegt.

3. Verbinder gemäß einem der Ansprüche 1 oder 2, **dadurch gekennzeichnet, dass** der Sockel (14) und das Gehäuse (22) längs über die vordere Querseite (24) des Sockels (14) hinaus durch zwei seitliche Verlängerungen (70) verlängert werden und dadurch, dass das Gehäuse (22) längs durch zwei Abschnitte (72, 74) eines vorderen Querrandes begrenzt wird, die jeweils in den bezeichneten Verlängerungen (70) gebildet werden und sich gegenüber der dem vorderen Querrand (50) der Karte (C) gegenüberliegenden Partien in der Verbindungsstellung in dem Gehäuse (22) erstrecken.

4. Verbinder gemäß einem der vorstehenden Ansprüche, **dadurch gekennzeichnet, dass** er einen Deckel (52) zum Halten der Karte (C) im Gehäuse (22) beinhaltet, welcher sich über der Oberseite der Karte erstreckt und längs begrenzt wird durch zwei rückwärtige (58) beziehungsweise vordere (56) Querränder, welche längs zwischen den rückwärtigen (26) und vorderen (24) Seiten des Sockels (14) liegen.

5. Verbinder gemäß Anspruch 4, **dadurch gekennzeichnet, dass** der rückwärtige Querrand (58) des Deckels (52) längs bezogen auf den rückwärtigen Querrand (30) des Gehäuses (22) vorn liegt.

6. Verbinder gemäß Anspruch 4, **dadurch gekennzeichnet, dass** der vordere Querrand (56) des Deckels (52) in Längsrichtung ungefähr im rechten Winkel zur vorderen Querseite (24) des Sockels (14) liegt.

7. Verbinder gemäß einem der vorstehenden Ansprüche, **dadurch gekennzeichnet, dass** der Deckel (52) hergestellt wurde in Form einer Platte (53), die sich über der Oberseite der Karte (C) erstreckt und wobei deren parallele seitliche Ränder verlängert werden durch zwei für die Befestigung des Deckels am Sockel (14) heruntergeklappte Halterungen (60).

8. Verbinder gemäß Anspruch 7, **dadurch gekennzeichnet, dass** die beiden Befestigungshalterungen (60) Gleitschienen bilden, die den Einbau des Deckels (52) am Sockel (14) durch Hin- und Herbewegung entsprechend der Längsrichtung ermöglichen.

9. Verbinder gemäß Anspruch 8, **dadurch gekennzeichnet, dass** der Deckel (52) bezogen auf den Sockel (14) verschiebbar angebracht ist zwischen einer geschlossenen Stellung, in welcher er sich über dem Gehäuse (22) erstreckt und einer offenen Stellung, in welcher der Zugang zum Gehäuse (22) frei ist, um das Einbringen der Karte (C) in etwa senkrechter Richtung zum Boden des Gehäuses zu ermöglichen.

10. Verbinder gemäß einem der vorstehenden Ansprüche, **dadurch gekennzeichnet, dass** der Deckel (52) ein Metallteil ist.

11. Verbinder gemäß einem der vorstehenden Ansprüche, **dadurch gekennzeichnet, dass** der Deckel (52) eine Reihe von Öffnungen (68) beinhaltet, die sich in der geschlossenen Stellung des Deckels (52) gegenüber den Kontaktenden (40) der Kontaktstücke (42) erstrecken.
